# EUROPÄISCHE PATENTSCHRIFT

(11) **EP 1 609 908 B1**
(45) Veröffentlichungstag und Bekanntmachung des Hinweises auf die Patenterteilung: **31.12.2008**
(21) Anmeldenummer: 05107870.7
(22) Anmeldetag: 19.10.2002
(51) Int. Cl.: D21G 1/00, F16F 15/02

(54) **Verfahren zur Verminderung von Biegeschwingungen an mindestens einem rotierenden Zylinder einer Bearbeitungsmaschine und eine Bearbeitungsmaschine**
Method and a device for reducing bending vibrations in rotating cylinder of a processing machine and processing machine
Procédé et dispositif pour réduire des vibrations de flexion à au moins un cylindre rotatif d`une machine d`usinage et machine d`usinage

(30) Priorität: 01.02.2002 DE 10204322; 02.07.2002 DE 10229708
(43) Veröffentlichungstag der Anmeldung: 28.12.2005
(62) Teilanmeldung aus: 02782733.6
(73) Patentinhaber: Koenig & Bauer Aktiengesellschaft, 97080 Würzburg (DE)
(72) Erfinder: Bolza-Schünemann, Claus, 97082, Würzburg (DE)
(74) Vertreter: Hoffmann, Thomas

(56) Entgegenhaltungen:
- EP-A- 0 319 886
- EP-A- 0 419 826
- EP-A- 1 584 744
- WO-A-97/03832
- WO-A-03/064763
- DE-A- 10 022 151
- DE-A- 19 652 769
- US-A- 3 347 157
- US-A- 5 961 899
- PATENT ABSTRACTS OF JAPAN Bd. 017, Nr. 002 (M-1348), 5. Januar 1993 (1993-01-05) & JP 04 236819 A (EBARA CORP), 25. August 1992 (1992-08-25)

## Beschreibung

Die Erfindung betrifft ein Verfahren zur Verminderung von Biegeschwingungen an mindestens einem rotierenden Zylinder einer Bearbeitungsmaschine und eine Bearbeitungsmaschine gemäß dem Oberbegriff der Ansprüche 1 oder 27.

Durch die EP 0 956 950 A1 ist ein Verfahren und eine Vorrichtung zum aktiven Unterdrücken von Schwingungen bekannt, wobei Ausgleichskräfte in Abhängigkeit von den gemessenen Kräften z. B. auf Walzen aufgebracht werden. Die Frequenz für die Beaufschlagung der Kraft wird laufend u. a. aus der aktuellen Drehzahl bestimmt, die Phase und Amplitude aus Messungen von Wegsignalen eines Abstandssensors.

Die EP 0 331 870 A2 offenbart eine Einrichtung zum Lagern von Zylindern, wobei Zapfen eines Zylinders in zwei in axialer Richtung des Zylinders nebeneinander angeordneten Lagern gelagert sind. Mittels Druckmittelzylindern können die Lager einzeln senkrecht zur Rotationsachse bewegt werden um beispielsweise eine Durchbiegung zu kompensieren.

In der WO 01/50035 A1 wird ein Verfahren zur Kompensation von Schwingungen rotierender Bauteile offenbart, wobei ein Aktuator im Bereich einer Mantelfläche des rotierenden Bauteils angeordnet ist, und bei einer Aktivierung in Abhängigkeit von der Drehwinkellage des rotierenden Bauteils der Schwingung mit eine Kraftkomponente in axialer Richtung entgegenwirkt.

Die JP 4-236819 A beschreibt ein System zur Reduktion von Biegeschwingungen an einer Welle, wobei eine mit der Welle verbundene rotierende Scheibe durch Piezoelemente über Elektromagnete in Abhängigkeit von Meßwerten mit Kräften beaufschlagt wird.

Die WO 97/03832 A1 zeigt in ihrer Abhandlung zum Stand der Technik verschiedene Wege auf, durch welche eine Durchbiegung oder eine Biegeschwingung an Presseuren statische vermindert werden kann. Sie schlägt als dynamische Lösung vor, auftretende Schwingungen zu messen, und diese Meßwerte zur Regelung und Ansteuerung von Aktuatoren heranzuziehen.

Die DE 199 30 600 A1 offenbart ein Verfahren zur Verminderung unerwünschter Biegeschwingungen an einem rotierenden Bauteil einer Streicheinrichtung mit einem Aktuator, wobei der Aktuator auf einen Lagerzapfen wirkt.

Die DE 196 52 769 A1 offenbart ein Verfahren zur Dämpfung unerwünschter Schwingungen an einer Walze einer Papiermaschine mit einem auf den Zapfen der Walze wirkenden Aktuator.

Der Erfindung liegt die Aufgabe zugrunde, ein Verfahren zur Verminderung von Biegeschwingungen an mindestens einem rotierenden Zylinder einer Bearbeitungsmaschine und eine Bearbeitungsmaschine zu schaffen.

Die Aufgabe wird erfindungsgemäß durch die Merkmale der Ansprüche 1 bzw. 27 gelöst.

Die mit der Erfindung erzielbaren Vorteile bestehen insbesondere darin, dass mit geringem Aufwand eine Möglichkeit geschaffen wurde, Schwingungen wirksam zu vermindern. Die Verminderung der Schwingung kann während der laufenden Produktion aktiv erfolgen.

Die Korrelation der zu ergreifenden Gegenmaßnahme mit der Drehwinkellage ist von besonderem Vorteil, da hiermit beispielsweise vielen der periodisch wiederkehrenden Störungen, wie z. B. Unsymmetrien, Oberflächenfehler, Kanäle und andere Unterbrechungen an der Mantelfläche, Unwucht, entsprochen wird.

Die Verfahrensweise ermöglicht ein Entgegenwirken einer Anregung bzw. Schwingung im Moment des Entstehens, ohne dass zunächst eine negative Auswirkung festgestellt und verarbeitet wird, bevor eine zweckmäßige Maßnahme ergriffen wird. Sowohl der auf den Drehwinkel bezogene Verlauf der Maßnahme als auch deren Größe ist in bevorzugter Ausführung vorgehalten.

Eine kontinuierliche Messung und Weiterverarbeitung von Daten zu Schwingungen oder Verformungen kann entfallen.

Besonders wenn zwei oder mehr Zylinder zusammen wirken - wie. z. B. bei Druckeinheiten für den sog. "Gummi-gegen-Gummi-Druck" - und ein oder mehrere der Zylinder Störungen an ihren Mantelflächen oder Unwuchten (Unsymmetrien) aufweisen, wirkt die Verfahrensweise dem Entstehen von Schwingungen bereits entgegen und hilft somit ein "Aufschaukeln" des gesamten Systems zu vermeiden.

Ausführungsbeispiele der Erfindung sind in den Zeichnungen dargestellt und werden im folgenden näher beschrieben. Es zeigen:
- Fig. 1: ein nicht beanspruchtes Beispiel für das Verfahren und die Vorrichtung zur Verminderung von Schwingungen;
- Fig. 2: exemplarische Verläufe einer Abhängigkeit eines Signals für einen Aktuator von einer Drehwinkellage eines Zylinders (a: diskret; b: stetig);
- Fig. 3: ein Ausführungsbeispiel für das Verfahren und die Vorrichtung;
- Fig. 4: eine Ausführungsvariante zu Fig. 3;
- Fig. 5: Ausführungsbeispiele a), b) für das Verfahren und die Vorrichtung an einer Druckeinheit mit vier Zylindern.

Ein rotierendes Bauteil 01, z. B. ein Zylinder 01 oder eine Walze 01 einer Bearbeitungsmaschine, insbesondere einer Rotationsdruckmaschine, z. B. für bahnförmiges Gut, ist zwischen zwei Seitengestellen 02; 03 drehbar gelagert. Hierzu weist der Zylinder 01 z. B. jeweils stirnseitig in Lagern 04; 06 gelagerte Zapfen 07; 08 auf. Der Zylinder 01 weist z. B. eine Länge von 1350 bis 1550 mm und einen Durchmesser von z. B. 450 bis 700, insbesondere von 500 bis 600 mm auf. Der Zylinder 01 weist z. B. ein Verhältnis zwischen Länge L01 und Durchmesser D01 von 6 bis 12, insbesondere zwischen 7 und 11 auf.

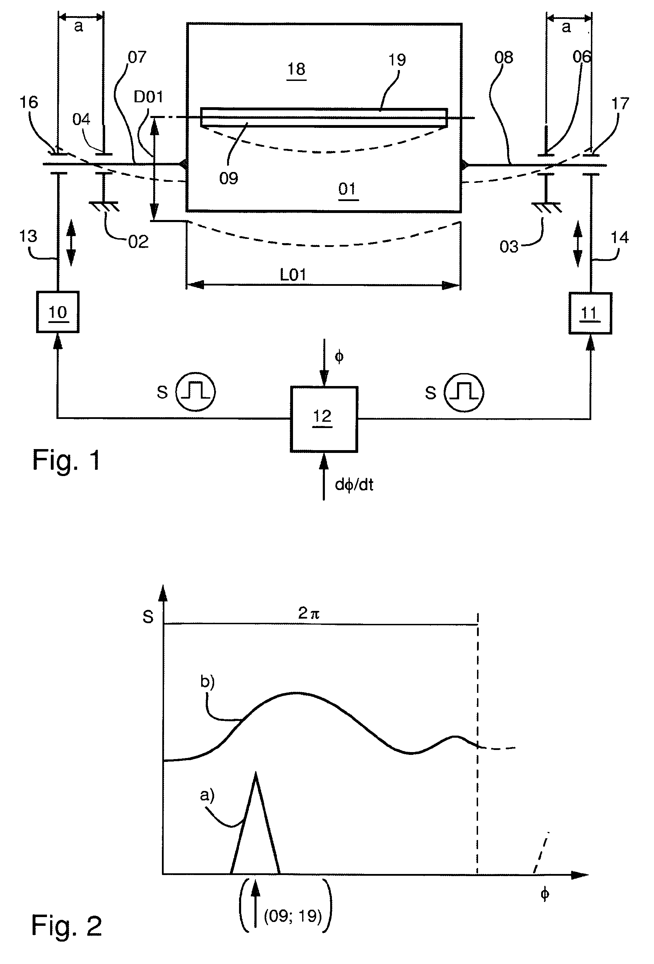

Während der Rotation können ungewünschte Schwingungen des Zylinders 01, insbesondere Biegeschwingungen, auftreten, welche z. B. durch Unrundheiten, Unsymmetrien oder aber durch Abrollen auf einem weiteren rotierenden Bauteil - ggf. ebenfalls mit einer Unsymmetrie behaftet - verursacht sein können. Insbesondere stellen z. B. ein oder mehrere axial auf der Mantelfläche verlaufende Kanäle 09 für die Befestigung von nicht dargestellten Aufzügen, oder aber Stöße von Aufzugenden, während der Rotation periodisch auftretende Störungen 09 dar, welche den Zylinder 01 zu den unerwünschten Schwingungen anregt. Den genannten Störungen 09 gemeinsam ist, dass diese für eine bekannte, stationäre Betriebssituation in gleicher oder zumindest ähnlicher Weise und Größenordnung auftreten. Eine Momentaufnahme des Zylinders 01 z. B. am Wendepunkt der Schwingung ist stark überzeichnet in Fig. 1 strichliert dargestellt.

Zur Verminderung der unerwünschten Schwingungen ist dem Zylinder 01 mindestens ein Aktuator 10; 11 zugeordnet, mittels welchem der Schwingung entgegengewirkt werden kann. Der Aktuator 10; 11 wird hierzu mit Signalen S beaufschlagt, deren Abfolge und/oder deren Höhe in einer Abhängigkeit von einer Drehwinkellage Φ des rotierenden Bauteils vorgehalten wird. Die Drehwinkellage Φ des Zylinders 01 ist z. B. entweder aus einer nicht dargestellten Maschinensteuerung oder durch einen nicht dargestellten, den Zylinder 01 antreibenden winkelgeregelten Elektromotor bekannt, oder aber sie wird mittels eines Sensors am Zylinder 01 ermittelt.

Fig. 2 zeigt beispielhafte Darstellungen für den Verlauf und die Höhe der z. B. in einer Steuer- bzw. Speichereinrichtung 12 (oder in einer Schaltung) hinterlegten bzw. vorgehaltenen Signale S in Abhängigkeit von der Drehwinkellage Φ. Die dargestellte, und sich periodisch wiederholende Periodenlänge kann bei Vorliegen einer einzigen Störung 09 beispielsweise eine Umdrehung (2π bzw. 360°) in Umfangsrichtung, oder bei mehreren, symmetrisch angeordneten, vergleichbaren Störungen 09 z. B. ein ganzzahliger Teil der Umdrehung (z. B. 180°, 120° etc.) sein. Der Aktuator wird während einer stationären Betriebssituation periodisch wiederkehrend mit der vorgehaltenen Abfolge bzw. Höhe des Signals S beaufschlagt. Die Abhängigkeit S(Φ) kann als diskrete Impulse (a) oder als innerhalb einer Periode stetig verlaufende Funktion (b) hinterlegt sein. Vorteilhaft ist es, wenn eine Beaufschlagung mit einer veränderlichen Kraft erfolgt, indem mindestens ein Zapfen 04; 06 des rotierenden Bauteils 01; 18 wenigstens einmal je Umdrehung mit einem entsprechenden Kraftimpuls gezielt beaufschlagt wird. Das Signal S ist direkt mit der Drehwinkellage Φ korreliert. Für unterschiedliche Betriebssituationen, wie z. B. verschiedene Drehzahlbereiche, unterschiedliche Aufzüge oder andere die Charakteristik bestimmende Größen, können verschiedene Abhängigkeiten hinterlegt sein. So können beispielsweise in der Nähe von Drehzahlen der Resonanzfrequenz der Anregung des Zylinders 01 höhere Niveaus gefordert sein als in anderen Bereichen. Diese Abhängigkeiten können auch mathematisch miteinander verbunden oder in anderer Weise erzeugbar sein. So kann für annähernd dieselben Konfigurationen der Verlauf zwar gleich, die absolute Höhe jedoch mit der vorliegenden Winkelgeschwindigkeit dΦ /dt, als Offset oder spreizend, korreliert sein.

In einem nicht beanspruchten Beispiel nach Fig. 1 wirkt jeweils ein Aktuator 10; 11 auf jeweils einen der Zapfen 07; 08, indem eine Koppel 13; 14 z. B. den Zapfen 07; 08 über ein Lager 16; 17 umfaßt. In vorteilhafter Ausführung greift die Koppel 13; 14 an einem Teil der Zapfen an, welcher auf der vom Zylinder 01 abgewandten Seite des Lagers 04; 06 über dieses hinausragt. Über die Steuereinrichtung 12 wird nun dem strichliert dargestellten Verlauf des Zylinders 01 und Zapfen 07; 08 entgegengewirkt, in dem in geeigneten Drehwinkellagen Φ entsprechende Signale S, oder kontinuierlich mit einem stetigen Verlauf, der Aktuator 10; 11 eine Gegenkraft (positiv oder negativ) auf den Zapfen aufbringt. Das Signal beinhaltet die Höhe und, wenn erforderlich, die Richtung der durch den Aktuator aufzubringenden Gegenkraft. Die Lager 04; 06 stellen für die Zapfen 07; 08 eine Klemmstelle dar. Über den einen Hebelarm darstellenden Teil des Zapfens 07; 08 wird ein Biegemoment in den Zylinder 01 eingeleitet. Es kann zwar prinzipiell ein Aktuator 10; 11 für den Zylinder 01 ausreichend sein, vorteilhaft ist jedoch die Anordnung von zwei Aktuatoren 10; 11, jeweils im Bereich eines Zapfens 04; 06.

Der Aktuator 10; 11 kann insbesondere als Piezoelement 10; 11 ausgeführt sein. Das Signal S steuert hier beispielsweise die Spannung aus einer nicht dargestellten Spannungsquelle, welche am Piezoelement 10; 11 anzuliegen hat. Anstelle des Signals S kann dem Aktuator auch direkt eine entsprechende Spannung zugeführt werden, welche in diesem Fall bereits durch die Steuereinrichtung 12 bereitgestellt wird. Als Aktuatoren 10; 11 kommen jedoch auch andere Einrichtungen, z. B. auf Magnetkraft basierende oder hydraulische Einheiten in Frage.

Je Umdrehung des Zylinders 01 wird der bzw. werden die Zapfen 07; 08 des Zylinders 01 zumindest einmal mit einer äußeren Kraft bzw. einem Kraftimpuls gezielt beaufschlagt oder erfahren zumindest einmal je Umdrehung eine Änderung in der von außen gezielt aufgebrachten Kraft.

Der Zylinder 01, z. B. als Formzylinder 01, wirkt z. B. mit einem zweiten rotierenden Bauteil 18, beispielsweise einem zweiten Zylinder 18 wie z. B. einem Übertragungszylinder 18, zusammen, welcher ebenfalls eine oder mehrere axial verlaufende Störungen 19 auf seiner Mantelfläche aufweisen kann. Er kann jedoch auch ohne Störung 19 ausgeführt sein. Die Ansteuerung der Aktuatoren 10; 11 erfolgt nun beispielsweise in der o. g. Weise derart, dass insbesondere auch die Anregung der Schwingung beim Durchgang der Störungen 09; 19 gedämpft wird. Beim Durchgang kann z. B. gleichzeitig ein entsprechender Impuls über das Signal S auf den Zapfen 07; 08 gegeben werden. Ein großer Vorteil an dieser Verfahrensweise ist, dass das Signal S bzw. die Gegenkraft vorgehalten wird, und daher zum Zeitpunkt der Anregung einer potentiellen Schwingung die Gegenkraft oder ein Stellweg bereits beaufschlagbar ist. Es wird nicht erst eine negative Auswirkung gemessen um eine geeignete Reaktion einzuleiten.

Die Zylinder 01; 18 sind z. B. zum An- bzw. Abstellen bzw. zur Variation der Anstellung in allen Beispielen vorzugsweise bzgl. ihrer Rotationsachsen im Abstand zueinander veränderbar gelagert. Hierzu ist mindestens einer der Zylinder, z. B. der Zylinder 01 z. B. in den als Exzenterlager 04; 06 ausgeführten Lagern 04; 06 gelagert. Er kann jedoch auch schwenkbar an Hebeln oder auch in einer Linearführung geführt sein.

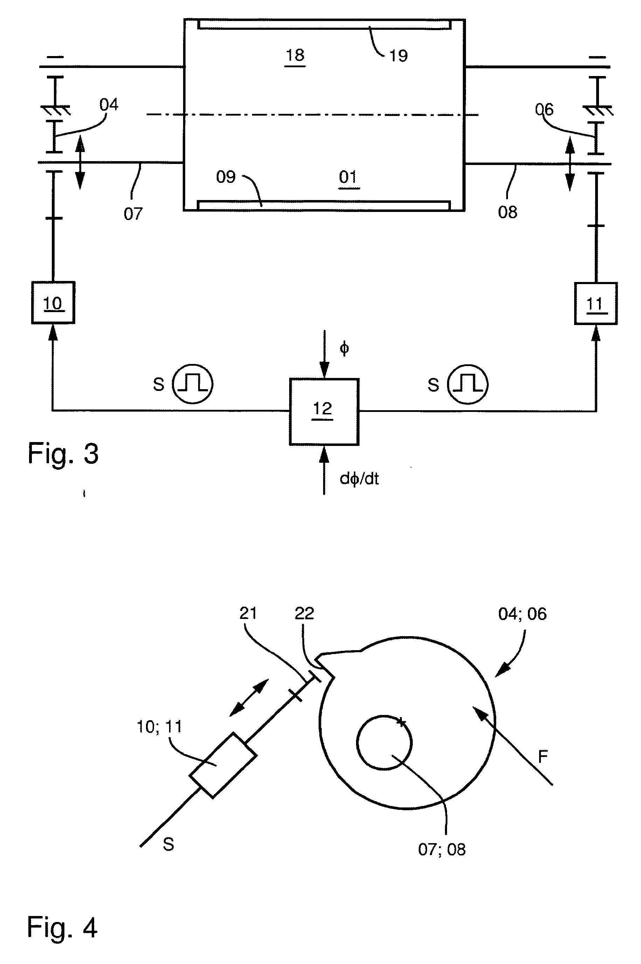

In einem Ausführungsbeispiel (Fig. 3) ist der Zylinder 01 bewegbar gelagert. Der Aktuator 10; 11 greift am Lager 04; 06 selbst an, welches entweder im Seitengestell 02; 03 bewegbar, oder aber beispielsweise als Exzenterlager (z. B. Drei- oder Vierringlager) ausgeführt ist. Durch den Aktuator 10; 11 ist der Zylinder 01 entsprechend der Signale S in einer Bewegungsrichtung verschiebbar, welche im wesentlichen senkrecht zur Rotationsachse des Zylinders 01 steht. Die Bewegung weist zumindest eine Komponente zu einem zusammen wirkenden Zylinder 18 hin, bzw. von diesem weg, auf. Der Zylinder 01, z. B. als Formzylinder 01, wirkt z. B. wieder mit dem zweiten Zylinder 18 zusammen, welcher keine, eine oder mehrere Störungen 19 auf seiner Mantelfläche aufweist. Die Ansteuerung der Aktuatoren 10; 11 erfolgt wie bereits für das erste Ausführungsbeispiel dargelegt. Hierbei kann das Signal S eine Information über den Stellweg enthalten. Eine Anregung beim Durchgang der Störung und/oder ein "Nachschwingen" des Zylinders 01 kann so, je nach hinterlegtem Verlauf des Signals S, wirksam vermindert werden.

In einer Ausführungsvariante (Fig. 4) wirkt der Aktuators 10; 11 nicht direkt auf den Zylinder 01 bzw. dessen Zapfen 07; 08, sondern auf einen eine Druck-An-Stellung begrenzenden Anschlag 21, welcher je nach Zustand des Aktuators 10; 11 die Bewegung des Zylinders 01 in den Grenzen des durch das Signals S vorgegebenen Stellweges erlaubt. Der Gegenanschlag 22 wird i. d. R. in Druck-An-Stellung z. B. mittels eines das Lager 04; 06 verdrehenden Stellmittels mit einer Kraft F, z. B. mittels eines nicht dargestellten Druckmittelzylinders an den Anschlag 21 gestellt. So kann beispielsweise bei Durchgang der Störung 09; 19 eine Entlastung durch Ausfahren des Anschlages 21 entgegen der erfolgen, und so die Anregung der Schwingung gedämpft bzw. unterdrückt werden. Im Beispiel ist der Anschlag 21 zwar in Verbindung mit einem Exzenterlager 04; 06 dargestellt, die Verfahrensweise ist jedoch in der gleichen Weise auf Linearlager oder Lager in verschwenkbaren Hebeln zu übertragen.

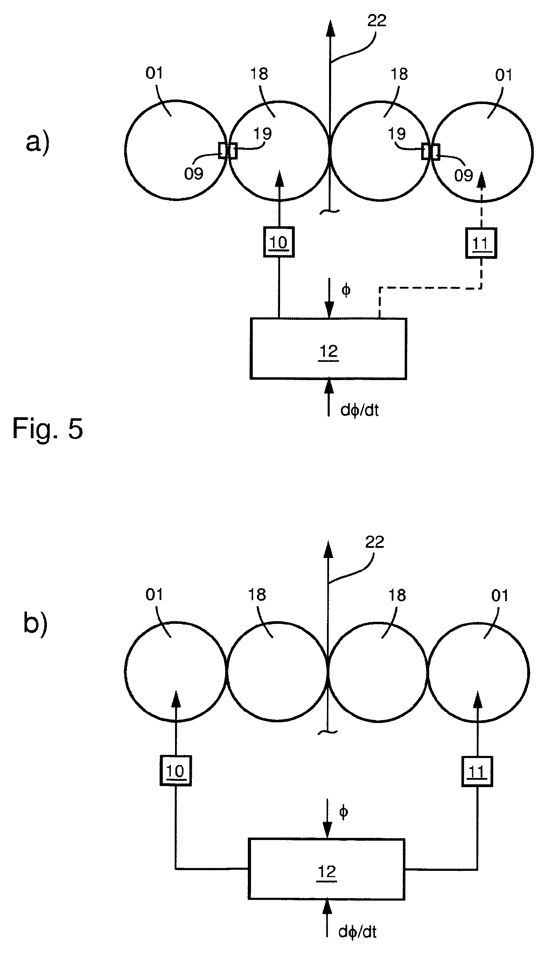

Von großem Vorteil ist, wie in Fig. 5 dargestellt, der Einsatz der beschriebenen Verfahrensweise in Druckeinheiten, wobei zwei Paare, jeweils ein Formzylinder 01 und ein Übertragungszylinder 01 eine Doppeldruckstelle für eine zwischen den Übertragungszylindern 18 hindurchgeführte und zu bearbeitende Bahn 23, z. B. eine zu bedruckende Bedruckstoffbahn 23, bilden. Die Zylinder 01; 18 weisen beispielsweise alle einen Umfang auf, welcher im wesentlichen der Länge einer Druckseite, z. B. Zeitungsseite, entspricht. Die Länge L01 der Ballen entspricht z. B. im wesentlichen der vierfachen Breite von vier nebeneinander angeordneten Druckseiten, z. B. Zeitungsbreiten. In diesem Fall weisen die Zylinder 01 und/oder 18 in Umfangsrichtung jeweils einen Kanal 09 und/oder 19 auf. Die Abmessungen der Zylinder 01; 18 können jedoch auch derart sein, dass in Umfangsrichtung im wesentlichen zwei Längsseiten, und in Längsrichtung sechs oder gar acht Seitenbreiten einer Druckseite, z. B. Zeitungsseite, anordenbar sind. In diesem Fall können beispielsweise zwei Kanäle 09 und/oder 19 am Umfang der Zylinder 01 und/oder 18 angeordnet sein.

Wie in Fig. 5 a) dargestellt, ist bereits die Ausrüstung und die entsprechende Verfahrensweise für einen der Übertragungszylinder 18 denkbar, um wirksam die Schwingungen im Bereich der Druckstelle zu vermindern. Es wird erreicht, dass zumindest die Anregungen in unmittelbarer Nähe zur zu bedruckenden Bahn 23 vermindert werden. Die Phase der Störungen 09; 19 ist derart angeordnet, dass die benachbarten Störungen 09; 19 jeweils aufeinander abrollen.

In Fig. 5, a) ist strichliert eine vorteilhafte Variante dargestellt, wobei ein Formzylinder 01 und ein Übertragungszylinder 18 in der entsprechenden Verfahrensweise betrieben werden. Die Ausführung mit Aktuator 10; 11 ist bevorzugt an nichtbewegten Zylindern 01; 18 angeordnet.

Sind lediglich an den Formzylindern 18 derartige Störungen 19 vorhanden, oder ist beabsichtigt, in der Hauptsache die Schwingungen an der Nippstelle zwischen Form- 01 und Übertragungszylinder 18 zu vermindern, so ist es von Vorteil, lediglich die beiden Formzylinder 18 mit der beschriebenen Vorrichtung auszuführen und in der genannten Verfahrensweise zu betreiben (Fig. 5 b)). In diesem Fall kann ggf. am Formzylinder 01 die Gegenkraft überhöht werden, um ein paralleles Schwingen der beiden zusammenwirkenden Zylinder 01; 18 zu erreichen.

Vorteilhaft ist die Anordnung an Zylindern 01; 18, welche nicht zur An- und Abstellung bewegt werden müssen. Es ist jedoch aber auch möglich, beispielsweise lediglich die beiden Übertragungszylinder 18, oder auch alle Zylinder 01; 18 mit der Vorrichtung auszuführen.

Die anhand einer Gummi-gegen-Gummi-Druckeinheit dargestellten Lösungen sind selbstverständlich auch auf Druckeinheiten anzuwenden, welche einen Satellitenzylinder aufweisen, wie z. B. Neunzylinder- oder Zehnzylinder-Druckeinheiten.

Die Verfahrensweise ist auch auf andere Bearbeitungsmaschinen anwendbar, in welchen mittels rotierender Bauteile Materialien möglichst exakt transportiert und/oder bearbeitet werden sollen. Insbesondere ist die Verfahrensweise und die Vorrichtung von Vorteil, wenn das rotierende Bauteil 01 auf seiner Mantelfläche eine Störung 09; 19, eine Unwucht aufgrund von Fertigung oder Unsymmetrien aufweist, und/oder mit einem zweiten Rotationskörper 18 zusammenwirkt, welcher eine der genannten Eigenschaften aufweist.

Die Verfahrensweise für das gesamte Verfahren ist wie folgt:
Zunächst wird ein Verlauf der unerwünschten Schwingung in Abhängigkeit von der Drehwinkellage Φ für eine bestimmte Konfigurierung und/oder Betriebsweise bestimmt. Dies kann durch einen zusätzlichen, jedoch nicht dargestellten Sensor erfolgen. In einer vorteilhaften Ausführung findet der Aktuator 10; 11 gleichzeitig als Sensor Verwendung, wie die z. B. im Falle eines Piezoelementes 10; 11 möglich ist.

Anschließend wird empirisch und/oder durch theoretische Ableitung mit Hilfe dieser Abhängigkeit ein von der Drehwinkellage Φ abhängiger Verlauf einer geeigneten Gegenkraft bzw. eines Stellweges in der Weise ermittelt, dass die Anregung selbst und/oder die Schwingung wirksam unterdrückt wird. Für diese Betriebsweise wird der Verlauf der Schwingung selbst und/oder der Verlauf der ermittelten Gegenkraft bzw. des Stellweges in der Speichereinheit 12 abgelegt. Der Verlauf für die Beaufschlagung ist somit vorbestimmt und während des Betriebes weitgehend unabhängig von die Schwingung charakterisierenden Messwerten, sondern letztlich nur von der Drehwinkellage Φ.

Der ermittelte Verlauf bzw. die Höhe kann nun auch für andere Betriebsweisen bzw. Konfigurationen verwendet werden, wenn die Toleranzen im fertigen Produkt, der Maschinenbelastung etc. dies zulassen. Das rotierende Bauteil wird während dieser vergleichbaren stationären Betriebssituationen periodisch wiederkehrend mit den gewonnenen und vorgehaltenen Signalen entsprechend dem Verlauf der ermittelten Gegenkraft bzw. des Stellweges beaufschlagt.

Im anderen Fall wird der geschilderte Vorgang für verschiedene praxisrelevante Betriebsweisen/Konfigurationen durchgeführt, und die entsprechende Abhängigkeit S(Φ) zusammen mit den die Betriebsweise/Konfiguration charakterisierenden Größen abgelegt. Diese Abhängigkeiten S(Φ) können für die gewünschte Produktion jeweils abgerufen und in der beschriebenen Weise zur Verminderung der Schwingungen eingesetzt werden.

Für die Verfahrensweise während der Produktion ist somit keine ständige Ermittlung aktueller Größen zur Charakterisierung der Schwingung unbedingt erforderlich. Die Verfahrensweise arbeitet schnell und effektiv, da die zu ergreifende Maßnahme bereits vor Eintritt des Ereignisses (Störung, Schwingung) vorgehalten wird.

Es kann auch eine gemischte Form des Verfahrens vorteilhaft sein, wobei zwar ein Grundmuster und eine Basiskraft anhand vorgehaltener, z. B. winkellageabhängiger, Daten vorgegeben, jedoch eine Anpassung von Höhe und Zeitpunkt anhand anderer ermittelter Meßwerte vorgenommen wird. Ein System, welches auf vorgehaltenen Signalen S bzw. Abfolgen beruht, kann auch zusätzlich selbstlernend und/oder adaptiv ausgeführt sein. Hierbei nutzt das System auf der einen Seite die zuverlässige und schnelle Methode des "Steuerns", und zwar bevor eine Messung des Fehlers und erst darauf hin eine Reaktion erfolgt, Verbesserungen des Algorithmus bzw. der vorgehaltenen Signale S bzw. Abfolgen und/oder Höhen können jedoch einfließen. Hierzu wird beispielsweise die Schwingung über eine Messung kontinuierlich oder in bestimmten Zyklen ermittelt, und die hinterlegten Parameter für die Signale S verändert bzw. ergänzt.

In einer vorteilhaften, weil einfachen Ausführung wird je auf dem Zylinder 01; 18 in Umfangsrichtung angeordnetem Kanal pro Umdrehung lediglich eine äußere Anregung, d. h. ein Signal S bzw. ein Kraftimpuls (z. B. puls-, rampen-, dreiecks- oder deltaförmig) dem Zylinder 01; 18 bzw. den Zapfen 04; 06 aufgeprägt. Die durch diesen einen Kraftimpuls (pro Kanal und pro Umdrehung) angeregte Schwingung bildet eine negative Interferenz zur durch den Kanal 09; 19 bzw. eine Unterbrechung 09; 19 angeregte Schwingung wenn die relative Winkellage Φ zwischen Kanalanregung und äußerem Kraftimpuls geeignet gewählt und die Amplitude entsprechend ist.

Da auf den Zylinder 01; 18 durch die Pressung der Gummitücher eine Streckenlast aufgebracht wird unter der sich die Zylinder 01; 18 verbiegen sind in vorteilhafter Ausführung durch die zusätzlichen Lager 16; 17, die Stützlager 16; 17, die außerhalb der Lager 04 sitzen, Kräfte eingebracht, die eine Gegenbiegung initiieren und so die gesamte Durchbiegung reduzieren. Da die Streckenlast im Moment der Kanalüberrollung kurzzeitig wegfällt (oder zumindest vermindert ist), sollte die Kraft, die die außenliegenden Lager 16 auf die Zapfen 07; 08 einbringen, in diesem Zeitfenster auch wegfallen (bzw. zurückgenommen werden), da sonst ein Überschwingen des Zylinders 01; 18 die Folge wäre. Durch die gesteuerte Einbringung der Biegekräfte auf die Zapfen 07; 08 während der Kanalüberrollung kann die Ursache des Schwingens, der Kanalschlag (d. h. der Wegfall des durch das Gummituch ausgeübten Biegemoments), zum Teil kompensiert werden kann. Die Kraftsteuerung muß in vorteilhafter Ausführung in einem Zeitfenster erfolgen, das in etwa der Dauer der Kanalüberrollung entspricht. Eine Alternative hierzu wäre wie in Fig. 2b) bereits genannt das Aufbringen von "Gegenschwingungen" zu den Schwingungen des Zylinders 01; 18. (Bekämpfung der Symptome). Ein Vorteil bei dieser Variante ist es jedoch für die Aktuatorik, dass die Kraftsteuerung nicht derart hochdynamisch erfolgen muß, da das relevante Zeitfenster dann durch die Schwingfrequenz des Zylinders 01; 18 und nicht durch die kurze Zeit der Überrollung gegeben ist.

Besonders für Zylinder 01; 18, deren Verhältnis zwischen Länge L01 und Durchmesser D01 von 6 bis 12, insbesondere zwischen 7 und 11 liegen ist die Ausführung von Vorteil, wobei in axialer Richtung des Zapfens 07; 08 ein Abstand a von der Mitte des Lagers 04; 06 bis Mitte Lager 16; 17 ca. 100 bis 230 mm beträgt. Für Durchmesser (zumindest im Bereich des Angriffspunktes der Lager 16; 17) des Zapfens 07; 08 von 55 bis 65 mm liegt der Abstand bevorzugt bei 125 bis 175 mm während er für Durchmesser von 65 bis 75 mm z. B. bei 150 bis 230 mm liegt. Der Zapfen 07; 08 wird während des Impulses mit einer Maximalkraft von z. B. 5 bis 15 kN, insbesondere 7,5 bis 11 kN beaufschlagt. Eine Bewegung des Stützlagers 16; 17 liegt vorteilhaft bei 25 bis 100 µm, für Durchmesser von 55 bis 65 mm z. B. bei 45 bis 100 µm, insbesondere bei ca. 60 µm, und für Durchmesser von 65 bis 75 mm z. B. bei 25 bis 80 µm.

Die Einleitung dieser Kraft kann nun in zwei unterschiedlichen Varianten erfolgen: So kann die Kraft während der Dauer des Drehens ohne Störung (keine Überrollung) durchgehend aufgebracht, und damit die Gegenbiegung erzeugt sein. Dies kann über den Aktuator selbst in "positiver" Richtung, oder aber über eine entsprechende mechanische Vorspannung erfolgen. Diese Kraft wird dann im Zeitfenster der Überrollung kurzzeitig zurückgenommen bzw. ausgeschaltet, was im ersten Fall durch Zurücknahme am Aktuator selbst und im zweiten Fall durch Entgegenwirken des Aktuators gegen die Vorspannung erreichbar ist. Hierdurch wird auch die statische Biegung reduziert.

Bei einer Rotationsgeschwindigkeit von 20.000 U/h (Umdrehungen pro Stunde) liegt das Zeitfenster für die Beaufschlagung bzw. Rücknahme z. B. bei 1,5 bis 5,0 ms, insbesondere bei 2,5 bis 4,0 ms. Bei 90.000 U/h liegt das Zeitfenster bei 0,3 bis 1,0 ms, insbesondere bei 0,6 bis 0,8 ms. Diese Zeitfenster stehen im Zusammenhang mit Breiten der Kanalöffnung auf der Mantelfläche in Umfangsrichtung von 1 bis 3 mm. Für doppelt so breite Öffnungen sind die Zeitfenster etwa Faktor zwei, für viermal so breite Öffnungen ca. Faktor vier größer.

In vorteilhafter Ausführung ist der Aktuator 10; 11 samt Steuer- bzw. Speichereinrichtung 12 und Energieversorgung derart ausgeführt, dass eine Kraft von z. B. 7,5 bis 11 kN bei einer Wegstrecke z. B. bei 25 bis 100 µm, aufbringbar ist. Bevorzugt wird hierfür ein piezoelektrisches System, wobei der Aktuator 10; 11 wie o. g. als Piezoelement 10; 11 ausgeführt ist.

### Bezugszeichenliste

- 01: rotierendes Bauteil, Zylinder, Formzylinder
- 02: Seitengestell
- 03: Seitengestell
- 04: Lager
- 05: -
- 06: Lager
- 07: Zapfen
- 08: Zapfen
- 09: Störung, Kanal, Unterbrechung
- 10: Aktuator, Piezoelement
- 11: Aktuator, Piezoelement
- 12: Steuereinrichtung
- 13: Koppel
- 14: Koppel
- 15: -
- 16: Lager
- 17: Lager
- 18: rotierendes Bauteil, Zylinder, Übertragungszylinder
- 19: Störung, Kanal
- 20: -
- 21: Anschlag
- 22: Gegenanschlag
- 23: Bahn, Bedruckstoffbahn

- a: Abstand (04, 16; 06, 18)
- D01: Durchmesser (01)
- L01: Länge (01)
- F: Kraft
- S: Signal

- Φ: Drehwinkellage
- dΦ/dt: Winkelgeschwindigkeit

## Patentansprüche

1. Verfahren zur Verminderung unerwünschter Biegeschwingungen an mindestens einem rotierenden Zylinder (01) einer Bearbeitungsmaschine, mit mindestens einem mit Signalen (S) beaufschlagbaren Aktuator (10; 11), mittels welchem einer unerwünschten Schwingung entgegengewirkt wird, indem der Aktuator (10; 11) auf einen Zapfen (07; 08) des Zylinders (01) wirkt, **dadurch gekennzeichnet, dass** der Aktuator (10; 11) an einem den Zapfen (07; 08) aufnehmenden Lager (04; 06) angreift und in Abhängigkeit seines Zustandes die Lage des Zapfens (07; 08) innerhalb einer Ebene senkrecht zur Rotationsachse des Zylinders (01; 18) verändert, und dass eine erforderliche Abfolge der Signale (S) und/oder deren Höhe in einer Abhängigkeit von der Drehwinkellage (Φ) des Zylinders (01; 18) vorgehalten wird, und dem Aktuator (10; 11) in Abhängigkeit von der Drehwinkellage (Φ) derart beaufschlagt wird, dass der Aktuator (10; 11) während einer stationären Betriebssituation periodisch wiederkehrend mit der vorgehaltenen Abfolge und/oder Höhe des Signals (S) beaufschlagt wird.

2. Verfahren nach Anspruch 1, **dadurch gekennzeichnet, dass** das Signal (S) die Höhe und die Richtung einer durch den Aktuator (10; 11) aufzubringenden oder zu ändernden Gegenkraft beinhaltet.

3. Verfahren nach Anspruch 1, **dadurch gekennzeichnet, dass** das Signal (S) die Größe und die Richtung eines erforderlichen Stellweges beinhaltet.

4. Verfahren nach Anspruch 1, **dadurch gekennzeichnet, dass** während einer stationären Betriebssituation der Aktuator (10; 11) periodisch wiederkehrend mit der vorgehaltenen Abfolge bzw. Höhe beaufschlagt wird.

5. Verfahren nach Anspruch 1, **dadurch gekennzeichnet, dass** zunächst ein Verlauf der unerwünschten Schwingung in Abhängigkeit von der Drehwinkellage (Φ) bestimmt und mit Hilfe dieser Abhängigkeit ein von der Drehwinkellage (Φ) abhängiger Verlauf einer aufzuprägenden oder zu ändernden Gegenkraft ermittelt wird, wobei der Verlauf der Schwingung und/oder der ermittelten Gegenkraft in einer Steuer- und/oder Speichereinrichtung (12) abgelegt und vorgehalten, und der rotierende Zylinder (01; 18) während einer stationären Betriebssituation periodisch wiederkehrend mit Signalen (S) entsprechend dem Verlauf der ermittelten und vorgehaltenen Gegenkraft beaufschlagt wird, wobei die Periodenlänge einer vollen Umdrehung des rotierenden Zylinders (01; 18) oder einem Quotienten aus einer Umdrehung und einer ganzen Zahl entspricht.

6. Verfahren nach Anspruch 5, **dadurch gekennzeichnet, dass** der rotierende Zylinder (01; 18) über mindestens einen Aktuator (10; 11) mit der Gegenkraft oder einer Änderung der Gegenkraft beaufschlagt wird.

7. Verfahren nach Anspruch 4 oder 6, **dadurch gekennzeichnet, dass** die Beaufschlagung des Aktuators (10; 11) während der Produktion ohne das zwingende Erfordernis einer ständigen Ermittlung aktueller Größen zur Charakterisierung der Schwingung erfolgt.

8. Verfahren nach Anspruch 1 oder 6, **dadurch gekennzeichnet, dass** der Aktuator (10; 11) zumindest mittelbar auf einen in einem Seitengestell (02; 03) gelagerten Zapfen (07; 08) des rotierenden Zylinders (01; 18) wirkt.

9. Verfahren nach Anspruch 1, **dadurch gekennzeichnet, dass** der Zylinder (01) im Seitengestell bewegbar gelagert wird.

10. Verfahren nach Anspruch 1, **dadurch gekennzeichnet, dass** der Zylinder (01) durch den Aktuator (10; 11) entsprechend der Signale (S) in einer Bewegungsrichtung bewegt wird, welche im wesentlichen senkrecht zur Rotationsachse des Zylinders (01) steht.

11. Verfahren nach Anspruch 1, **dadurch gekennzeichnet, dass** das Signal (S) dem Aktuator (10; 11) periodisch beaufschlagt wird.

12. Verfahren nach Anspruch 4 oder 5, **dadurch gekennzeichnet, dass** die Periodenlänge einer vollen Umdrehung des rotierenden Zylinders (01; 18) oder einem Quotienten aus einer Umdrehung und einer ganzen Zahl entspricht.

13. Verfahren nach Anspruch 2 oder 5, **dadurch gekennzeichnet, dass** die Gegenkraft bzw. deren Änderung als diskreter Impuls oder mehrere diskrete Impulse aufgebracht werden.

14. Verfahren nach Anspruch 2 oder 5, **dadurch gekennzeichnet, dass** die Gegenkraft bzw. deren Änderung als innerhalb einer Periode stetig verlaufende Funktion aufgebracht wird.

15. Verfahren nach Anspruch 2 oder 5, **dadurch gekennzeichnet, dass** zur Änderung der Gegenkraft mittels des Signals (S) eine Entlastung einer vorliegenden Vorspannung erfolgt.

16. Verfahren nach Anspruch 2, 3 oder 5, **dadurch gekennzeichnet, dass** die Gegenkraft und/oder der Stellweg direkt mit der Drehwinkellage (Φ) korreliert wird.

17. Verfahren nach Anspruch 4, **dadurch gekennzeichnet, dass** die vorgehaltene Abhängigkeit ermittelt wird, indem zunächst ein Verlauf der unerwünschten Schwingung in Abhängigkeit von der Drehwinkellage (Φ) des rotierenden Zylinders (01; 18) bestimmt wird, dass mit Hilfe dieser Abhängigkeit ein von der Drehwinkellage (Φ) abhängiger Verlauf für die Gegenkraft ermittelt, und der Verlauf der Schwingung und/oder der ermittelten Gegenkraft in einer Steuer- und/oder Speichereinrichtung abgelegt wird.

18. Verfahren nach Anspruch 5, **dadurch gekennzeichnet, dass** der unerwünschten Verlauf der Schwingung mit mindestens einem Sensor ermittelt wird.

19. Verfahren nach Anspruch 17, **dadurch gekennzeichnet, dass** der Aktuator (10; 11) als Sensor verwendet wird und umgekehrt.

20. Verfahren nach Anspruch 18, **dadurch gekennzeichnet, dass** als Aktuator (10; 11) bzw. Sensor ein Piezoelement (10; 11) verwendet wird.

21. Verfahren nach Anspruch 1, **dadurch gekennzeichnet, dass** einer unerwünschten Schwingung entgegengewirkt wird, indem eine Beaufschlagung mit einer veränderlichen Kraft erfolgt, dass mindestens ein Zapfen (04; 06) des rotierenden Zylinders (01; 18) wenigstens einmal je Umdrehung mit einem Kraftimpuls gezielt beaufschlagt oder eine Vorspannung gezielt entlastet wird, und dass je auf dem rotierenden Zylinders (01; 18) in Umfangsrichtung angeordneter Störung (09; 19) der Mantelfläche pro Umdrehung lediglich eine äußere Anregung, insbesondere in Form eines Kraftimpulses oder einer Entlastung, aufgeprägt wird.

22. Verfahren nach Anspruch 1, **dadurch gekennzeichnet, dass** einer unerwünschten Schwingung entgegengewirkt wird, indem eine Beaufschlagung mit einer veränderlichen Kraft erfolgt, dass mindestens ein Zapfen (04; 06) des rotierenden Zylinders (01; 18) wenigstens einmal je Umdrehung mit einem Kraftimpuls gezielt beaufschlagt oder eine Vorspannung gezielt entlastet wird, und dass die Form und/oder Dauer des aufgeprägten Kraftimpulses bzw. der Entlastung einer Anregung nachempfunden wird, welche durch das Abrollen einer auf dem Umfang des Zylinders (01; 18) angeordneten Störung (09; 19) auf einem zweiten Zylinder (18; 01) entsteht.

23. Verfahren nach Anspruch 21 oder 22, **dadurch gekennzeichnet, dass** der Zapfen (07; 08) mit einem von außen aufgeprägter Kraftimpuls bzw. Entlastung zusätzlich zu den durch die Schwingung hervorgerufenen Kräften bzw. die Schwingung bedingenden Impulsen beaufschlagt wird.

24. Verfahren nach Anspruch 22, **dadurch gekennzeichnet, dass** je auf dem rotierenden Zylinder (01; 18) in Umfangsrichtung angeordneten Störung (09; 19) pro Umdrehung lediglich eine äußere Anregung, insbesondere in Form eines Kraftimpulses oder einer Entlastung, aufgeprägt wird.

25. Verfahren nach Anspruch 21, **dadurch gekennzeichnet, dass** die Form und/oder Dauer des aufgeprägten Kraftimpulses bzw. der Entlastung einer Anregung nachempfunden wird, welche durch das Abrollen einer auf dem Umfang des Zylinders (01; 18) angeordneten Störung (09; 19) auf einem zweiten Zylinder (18; 01) entsteht.

26. Verfahren nach Anspruch 21 oder 22, **dadurch gekennzeichnet, dass** der Kraftimpuls bzw. die Entlastung dem Zapfen (04; 06) auf einer vom Zylinder (01; 18) abgewandten Seite eines die Zapfen (04; 06) aufnehmenden Lagers (04; 06) aufgeprägt wird.

27. Bearbeitungsmaschine mit mindestens einem, mit Zapfen (07; 08) an beiden Enden drehbar in Lagern (04; 06) gelagerten rotierenden Zylinder (01) und einer Vorrichtung zur Verminderung unerwünschter Biegeschwingungen mit mindestens einem Aktuator (10; 11), mittels welchem einer unerwünschten Schwingung entgegengewirkt wird, **dadurch gekennzeichnet, dass** der Aktuator (10; 11) am Lager (04; 06) angreift, dass eine Steuereinrichtung (12) vorgesehen ist, in welcher eine von der Drehwinkellage abhängige Abfolge von Signalen (S) zur Ansteuerung des Aktuators (10; 11) vorgehalten ist, dass mittels des Aktuators (10; 11) eine Lage des Zapfens (07, 08) entsprechend der Signale (S) in einer Bewegungsrichtung bewegbar ist, welche im wesentlichen senkrecht zur Rotationsachse des Zylinders (01) steht.

28. Bearbeitungsmaschine nach Anspruch 27, **dadurch gekennzeichnet, dass** der Zapfen (07; 08) über das Lager (16; 17) periodisch mit einem Kraftimpuls von maximal 5 bis 15 kN beaufschlagt ist.

29. Bearbeitungsmaschine nach Anspruch 27, **dadurch gekennzeichnet, dass** der Zapfen (07; 08) über das Lager (16; 17) mit einer Vorspannung von 5 bis 15 kN beaufschlagt und periodisch entlastet ist.

30. Bearbeitungsmaschine nach Anspruch 27, **dadurch gekennzeichnet, dass** der rotierende Zylinder (01; 18) ein Verhältnis zwischen einer Länge (L01) und einem Durchmesser (D01) seines Ballens aufweist, welches zwischen 11 und 7 liegt.

31. Bearbeitungsmaschine nach Anspruch 27, **dadurch gekennzeichnet, dass** die Bearbeitungsmaschine als Druckmaschine ausgeführt ist.

32. Bearbeitungsmaschine nach Anspruch 27, **dadurch gekennzeichnet, dass** der Zylinder (01) in einer Druck-An-Stellung mit mindestens einem zweiten Zylinder (18) als erstes Paar zusammen wirkt.

33. Bearbeitungsmaschine nach Anspruch 32, **dadurch gekennzeichnet, dass** lediglich einer der beiden Zylinder (01; 18) einen mit dem Signal (S) beaufschlagbaren Aktuator (10; 11) aufweist.

34. Bearbeitungsmaschine nach Anspruch 32, **dadurch gekennzeichnet, dass** zwei Paare mit insgesamt vier Zylindern (01; 18) zwischen den innenliegenden Zylindern (18) eine Doppeldruckstelle bilden, und dass lediglich die beiden außen liegenden Zylinder (01) einen mit jeweils einem Signal (S) beaufschlagbaren Aktuator (10; 11) aufweisen.

35. Bearbeitungsmaschine nach Anspruch 32, **dadurch gekennzeichnet, dass** zwei Paare mit insgesamt vier Zylindern (01; 18) zwischen den innenliegenden Zylindern (18) eine Doppeldruckstelle bilden, und dass lediglich die beiden die Druckstelle bildenden Zylinder (18) einen mit jeweils einem Signal (S) beaufschlagbaren Aktuator (10; 11) aufweisen.

36. Bearbeitungsmaschine nach Anspruch 32, **dadurch gekennzeichnet, dass** zwei Paare mit insgesamt vier Zylindern (01; 18) zwischen den innenliegenden Zylindern (18) eine Doppeldruckstelle bilden, und dass ein innenliegender und ein außen liegender Zylinder (01; 18) einen mit jeweils einem Signal (S) beaufschlagbaren Aktuator (10; 11) aufweist.

37. Bearbeitungsmaschine nach Anspruch 32, **dadurch gekennzeichnet, dass** zwei Paare mit insgesamt vier Zylindern (01; 18) zwischen den innenliegenden Zylindern (01) eine Doppeldruckstelle bilden, und dass lediglich einer der beiden die Druckstelle bildenden Zylinder (01) einen mit jeweils einem Signal (S) beaufschlagbaren Aktuator (10; 11) aufweist.

38. Bearbeitungsmaschine nach Anspruch 32, **dadurch gekennzeichnet, dass** zwei Paare mit insgesamt vier Zylindern (01; 18) zwischen den innenliegenden Zylindern (18) eine Doppeldruckstelle bilden, und dass alle vier Zylinder (01; 18) einen mit jeweils einem Signal (S) beaufschlagbaren Aktuator (10; 11) aufweisen.

39. Bearbeitungsmaschine nach Anspruch 27, **dadurch gekennzeichnet, dass** der Zylinder (01; 18) bezüglich des Seitengestells bewegbar ist.

40. Bearbeitungsmaschine nach Anspruch 27, **dadurch gekennzeichnet, dass** der Zylinder (01) durch den Aktuator (10; 11) entsprechend der Signale (S) in einer Bewegungsrichtung bewegbar ist, welche im wesentlichen senkrecht zur Rotationsachse des Zylinders (01) steht.

41. Bearbeitungsmaschine nach Anspruch 27, **dadurch gekennzeichnet, dass** der Aktuator (10; 11) als Piezoelement ausgebildet ist.

## Claims

1. A method of reducing undesired flexural vibrations on at least one rotating cylinder (01) of a processing machine, with at least one actuator (10; 11) which is capable of being acted upon with signals (S) and by means of which an undesired vibration is counteracted, in that the actuator (10; 11) acts upon a journal (07; 08) of the cylinder (01), **characterized in that** the actuator (10; 11) engages on a bearing (04; 06) receiving the journal (07; 08) and alters, in a manner dependent upon its state, the position of the journal (07; 08) within a plane at a right angle to the axis of rotation of the cylinder (01; 18), and a required sequence of the signals (S) and/or the height thereof is or are held in advance in a manner dependent upon the rotational-angle position (Φ) of the cylinder (01; 18), and is acted upon the actuator (10; 11) in a manner dependent upon the rotational-angle position (Φ) in such a way that during a stationary operative situation the actuator (10; 11) is acted upon in a periodically recurrent manner with the sequence and/or the height - held in advance - of the signal (S).

2. A method according to Claim 1, **characterized in that** the signal (S) includes the height and the direction of a counter force to be altered or to be applied by the actuator (10; 11).

3. A method according to Claim 1, **characterized in that** the signal (S) includes the magnitude and the direction of a required control path.

4. A method according to Claim 1, **characterized in that** during a stationary operating situation the actuator (10; 11) is acted upon in a periodically recurrent manner with the sequence or height held in advance.

5. A method according to Claim 1, **characterized in that** a pattern of the undesired vibration is first determined in a manner dependent upon the rotational-angle position (Φ) and with the aid of the said dependency a pattern - dependent upon the rotational-angle position (Φ) - of a counter force to be impressed or to be altered is determined, wherein the pattern of the vibration and/or of the counter force determined is deposited and held in advance in a control and/or storage device (12), and during a stationary operative situation the rotating cylinder (01; 18) is acted upon in a periodically recurrent manner with signals (S) in a manner corresponding to the pattern of the counter force determined and held in advance, wherein the periodic length corresponds to a complete revolution of the rotating cylinder (01; 18) or to a quotient from a revolution and an integer.

6. A method according to Claim 5, **characterized in that** the rotating cylinder (01; 18) is acted upon with the counter force or a change in the counter force by way of at least one actuator (10; 11).

7. A method according to Claim 4 or 6, **characterized in that** the stressing of the actuator (10; 11) during the production is carried out without it being absolutely necessary to determine current values constantly in order to characterize the vibration.

8. A method according to Claim 1 or 6, **characterized in that** the actuator (10; 11) acts at least indirectly upon a journal (07; 08), mounted in a lateral stand (02; 03), of the rotating cylinder (01; 18).

9. A method according to Claim 1, **characterized in that** the cylinder (01) is mounted in the lateral stand in a movable manner.

10. A method according to Claim 1, **characterized in that** the cylinder (01) is moved by the actuator (10; 11) in a manner corresponding to the signals (S) in a direction of movement which is substantially at a right angle to the axis of rotation of the cylinder (01).

11. A method according to Claim 1, **characterized in that** the signal (S) is acted upon the actuator (10; 11) periodically.

12. A method according to Claim 4 or 5, **characterized in that** the periodic length corresponds to a complete revolution of the rotating cylinder (01; 18) or to a quotient from one revolution and an integer.

13. A method according to Claim 2 or 5, **characterized in that** the counter force and its change are applied in the form of a discrete pulse or a plurality of discrete pulses.

14. A method according to Claim 2 or 5, **characterized in that** the counter force or the change thereof are applied in the form of a function taking place continuously within one period.

15. A method according to Claim 2 or 5, **characterized in that** a release of an existing pre-stressing is carried out in order to alter the counter force by means of the signal (S).

16. A method according to Claim 2, 3 or 5, **characterized in that** the counter force and/or the control path is or are correlated directly with the rotational-angle position (Φ).

17. A method according to Claim 4, **characterized in that** the dependency held in advance is determined **in that** a pattern of the undesired vibration is first determined in a manner dependent upon the rotational-angle position (Φ) of the rotating cylinder (01; 18), a pattern dependent upon the rotational-angle position (Φ) is determined for the counter force with the aid of the said dependency, and the pattern of the vibration and/or the counter force determined is stored in a control and/or memory device.

18. A method according to Claim 5, **characterized in that** the undesired pattern of the vibration is determined with at least one sensor.

19. A method according to Claim 17, **characterized in that** the actuator (10; 11) is used as a sensor and *vice versa.*

20. A method according to Claim 18, **characterized in that** a piezoelectric element (10; 11) is used as the actuator (10; 11) or sensor.

21. A method according to Claim 1, **characterized in that** an undesired vibration is counteracted **in that** a stressing with a variable force is carried out, at least one journal (04; 06) of the rotating cylinder (01; 18) is acted upon in a specific manner at least once *per* revolution with a power pulse or a pre-stressing is released in a specific manner, and only one external excitation, in particular in the form of a power pulse or a release, *per* revolution is impressed on the defect (09, 19) of the external face situated on the rotating cylinder (01; 18) in the peripheral direction.

22. A method according to Claim 1, **characterized in that** an undesired vibration is counteracted **in that** a stressing with a variable force is carried out, at least one journal (04; 06) of the rotating cylinder (01; 18) is acted upon in a specific manner at least once *per* revolution with a power pulse or a pre-stressing is released in a specific manner, and the shape and/or the duration of the impressed power pulse or the release of an excitation, which occurs as a result of a defect (09; 19) situated on the periphery of the cylinder (01; 18) rolling on a second cylinder (18; 01), is felt.

23. A method according to Claim 21 or 22, **characterized in that** the journal (07; 08) is acted upon with a power pulse or release impressed from the outside, in addition to the forces produced by the vibration or the pulses caused by the vibration.

24. A method according to Claim 22, **characterized in that** only one external excitation, in particular in the form of a power pulse or a release, *per* revolution is impressed on the defect (09; 19) situated on the rotating cylinder (01; 18) in the peripheral direction.

25. A method according to Claim 21, **characterized in that** the shape and/or the duration of the impressed power pulse or the release of an excitation, which occurs as a result of a defect (09; 19) situated on the periphery of the cylinder (01; 18) rolling on a second cylinder (18; 01), is felt.

26. A method according to Claim 21 or 22, **characterized in that** the power pulse or the release is impressed on the journal (04; 06) on a side - facing away from the cylinder (01; 18) - of a bearing (04; 06) receiving the journals (04; 06) *[sic].*

27. A processing machine with at least one rotating cylinder (01), mounted in bearings (04; 06) so as to be rotatable with journals (07; 08) at both ends, and an apparatus for reducing undesired flexural vibrations, with at least one actuator (10; 11) by means of which an undesired vibration is counteracted, **characterized in that** the actuator (10; 11) engages on the bearing (04; 06), a control device (12) is provided in which a sequence of signals (S) dependent upon the rotational-angle position is held in advance in order to actuate the actuator (10; 11), and a position of the journal (07; 08) is movable by means of the actuator (10; 11) in a manner corresponding to the signals (S) in a direction of movement which is substantially at a right angle to the axis of rotation of the cylinder (01).

28. A processing machine according to Claim 27, **characterized in that** the journal (07; 08) is periodically acted upon with a power pulse of a maximum of from 5 to 15 kN by way of the bearing (16; 17).

29. A processing machine according to Claim 27, **characterized in that** the journal (07; 08) is acted upon with a pre-stressing of from 5 to 15 kN by way of the bearing (16; 17) and is periodically released.

30. A processing machine according to Claim 27, **characterized in that** the rotating cylinder (01; 18) has a ratio between a length (L01) and a diameter (D01) of its barrel, which is between 11 and 7.

31. A processing machine according to Claim 27, **characterized in that** the processing machine is constructed in the form of a printing press.

32. A processing machine according to Claim 27, **characterized in that** the cylinder (01) co-operates in an impression throw-on with at least one second cylinder (18) as a first pair.

33. A processing machine according to Claim 32, **characterized in that** only one of the two cylinders (01; 18) has an actuator (10, 11) capable of being acted upon with the signal (S).

34. A processing machine according to Claim 32, **characterized in that** two pairs with altogether four cylinders (01; 18) form a double printing location between the cylinders (18) situated on the inside, and only the two cylinders (01) situated on the outside have an actuator (10, 11) capable of being acted upon with a signal (S) in each case.

35. A processing machine according to Claim 32, **characterized in that** two pairs with altogether four cylinders (01; 18) form a double printing location between the cylinders (18) situated on the inside, and only the two cylinders (18) forming the printing location have an actuator (10, 11) capable of being acted upon with a signal (S) in each case.

36. A processing machine according to Claim 32, **characterized in that** two pairs with altogether four cylinders (01; 18) form a double printing location between the cylinders (18) situated on the inside, and a cylinder situated on the inside and a cylinder situated on the outside (01; 18) have an actuator (10, 11) capable of being acted upon with a signal (S) in each case.

37. A processing machine according to Claim 32, **characterized in that** two pairs with altogether four cylinders (01; 18) form a double printing location between the cylinders (01) situated on the inside, and only one of the two cylinders (01) forming the printing location has an actuator (10, 11) capable of being acted upon with a signal (S) in each case.

38. A processing machine according to Claim 32, **characterized in that** two pairs with altogether four cylinders (01; 18) form a double printing location between the cylinders (18) situated on the inside, and all four cylinders (01; 18) have an actuator (10, 11) capable of being acted upon with a signal (S) in each case.

39. A processing machine according to Claim 27, **characterized in that** the cylinder (01; 18) is movable with respect to the lateral stand.

40. A processing machine according to Claim 27, **characterized in that** the cylinder (01) is movable by the actuator (10; 11) in a manner corresponding to the signals (S) in a direction of movement which is substantially at a right angle to the axis of rotation of the cylinder (01).

41. A processing machine according to Claim 27, **characterized in that** the actuator (10; 11) is constructed in the form of a piezo element.

## Revendications

1. Procédé pour réduire des vibrations en flexion indésirables en un moins un cylindre (01) rotatif d'une machine d'usinage, avec au moins un actionneur (10 ; 11), susceptible d'être sollicité par des signaux (S), actionneur au moyen duquel on s'oppose à une vibration indésirable, en ce que l'actionneur (10 ; 11) agit sur un tourillon (07 ; 08) du cylindre (01), **caractérisé en ce que** l'actionneur (10 ; 11) agit sur un palier (04 ; 06) supportant le tourillon (07 ; 08) et, en fonction de son état, modifie la position du tourillon (07 ; 08) à l'intérieur d'un plan perpendiculaire à l'axe de rotation du cylindre (01 ; 18), et **en ce qu'**une succession nécessaire des signaux (S) et/ou de leur hauteur, en fonction de la position angulaire en rotation (Φ) du cylindre (01 ; 18), est stockée et fournie pour solliciter l'actionneur (10 ; 11) en fonction de la position angulaire en rotation (Φ), de manière que, pendant une situation de fonctionnement stationnaire, l'actionneur (10 ; 11) soit sollicité, de façon revenant périodiquement, avec la succession stockée et/ou la hauteur stockée du signal (S).

2. Procédé selon la revendication 1, **caractérisé en ce que** le signal (S) contient la hauteur et le sens d'une force antagoniste, à appliquer ou à modifier au moyen de l'actionneur (10 ; 11).

3. Procédé selon la revendication 1, **caractérisé en ce que** le signal (S) contient la valeur et le sens d'une course de réglage nécessaire.

4. Procédé selon la revendication 1, **caractérisé en ce que**, pendant une situation de fonctionnement stationnaire, l'actionneur (10 ; 11) est sollicité, de façon revenant périodiquement, avec la succession stockée et/ou la hauteur stockée.

5. Procédé selon la revendication 1, **caractérisé en ce que**, d'abord, on détermine une allure de la vibration indésirable en fonction de la position angulaire en rotation (Φ) et, à l'aide de cette fonction de dépendance, on détermine une allure, dépendant de la position angulaire en rotation (Φ), d'une force antagoniste à appliquer ou à modifier, l'allure de la vibration et/ou de la force antagoniste déterminée étant placée dans un dispositif de commande et/ou de mémorisation (12) et conservée, et le cylindre rotatif (01 ; 18), pendant une situation de fonctionnement stationnaire, étant sollicité, de façon revenant périodiquement, par des signaux (S), de manière correspondante à l'allure de la force antagoniste déterminée et stockée, la longueur de période correspondant à un tour de rotation complet du cylindre (01 ; 18) rotatif ou à un quotient, formé d'un tour de rotation et d'un nombre entier.

6. Procédé selon la revendication 5, **caractérisé en ce que** le cylindre (01 ; 18) rotatif est sollicité par la force ou une modification de la force antagoniste, par l'intermédiaire d'au moins un actionneur (10 ; 11).

7. Procédé selon la revendication 4 ou 6, **caractérisé en ce que** la sollicitation de l'actionneur (10 ; 11) s'effectue pendant la production, sans la nécessité obligatoire d'une détermination permanente de grandeurs réelles pour caractérisation de la vibration.

8. Procédé selon la revendication 1 ou 6, **caractérisé en ce que** l'actionneur (10 ; 11) agit au moins indirectement sur un tourillon (07 ; 08), monté en palier dans un bâti latéral (02 ; 03), du cylindre (01 ; 18) rotatif.

9. Procédé selon la revendication 1, **caractérisé en ce que** le cylindre (01) est monté en palier, de façon déplaçable, dans le bâti latéral.

10. Procédé selon la revendication 1, **caractérisé en ce que** le cylindre (01) est déplacé par l'actionneur (10 ; 11), de manière correspondante aux signaux (S), dans une direction de déplacement sensiblement perpendiculaire à l'axe de rotation du cylindre (01).

11. Procédé selon la revendication 1, **caractérisé en ce que** le signal (S) sollicite l'actionneur (10 ; 111) périodiquement.

12. Procédé selon la revendication 4 ou 5, **caractérisé en ce que**, la longueur de période correspond à un tour de rotation complet du cylindre (01 ; 18) rotatif ou à un quotient, formé d'un tour de rotation et d'un nombre entier.

13. Procédé selon la revendication 2 ou 5, **caractérisé en ce que** la force antagoniste ou sa modification est appliquée sous forme d'impulsion discrète ou de plusieurs impulsions discrètes.

14. Procédé selon la revendication 2 ou 5, **caractérisé en ce que** la force antagoniste ou sa modification est appliquée de façon continue dans les limites d'une période.

15. Procédé selon la revendication 2 ou 5, **caractérisé en ce qu'**une décharge d'une précontrainte existante est effectuée au moyen du signal (S), pour modifier la force antagoniste.

16. Procédé selon la revendication 2, 3 ou 5, **caractérisé en ce que** la force antagoniste et/ou la course de réglage est/sont en corrélation directe avec la position angulaire en rotation (Φ).

17. Procédé selon la revendication 4, **caractérisé en ce que** la fonction de dépendance stockée est déterminée en déterminant d'abord une allure de la vibration indésirable en fonction de la position angulaire en rotation (Φ) du cylindre rotatif (01 ; 18), **en ce que**, à l'aide de cette fonction de dépendance, on détermine pour la force antagoniste une allure, dépendant de la position angulaire en rotation (Φ), de la force antagoniste, et l'allure de la vibration et/ou de la force antagoniste déterminée est déposée dans un dispositif de commande et/ou de mémorisation.

18. Procédé selon la revendication 5, **caractérisé en ce que** l'allure indésirable de la vibration est déterminée avec au moins un capteur.

19. Procédé selon la revendication 17, **caractérisé en ce que** l'actionneur (10 ; 11) est utilisé comme capteur et inversement.

20. Procédé selon la revendication 18, **caractérisé en ce qu'**un piézo-élément (10 ; 11) est utilisé comme actionneur (10 ; 11) ou capteur.

21. Procédé selon la revendication 1, **caractérisé en ce que** l'on agit à l'encontre d'une vibration indésirable en procédant à une sollicitation avec une force modifiable, **en ce qu'**au moins un tourillon (04 ; 06) du cylindre (01 ; 18) rotatif est sollicité à dessein, au moins une fois par tour de rotation, avec une impulsion de force, ou bien une précontrainte est déchargée à dessein, et **en ce qu'**à chaque perturbation (09 ; 19), disposée en direction périphérique sur le cylindre (01 ; 18) rotatif, de la surface d'enveloppe, pour chaque tour de rotation, est inculquée uniquement une excitation extérieure, en particulier se présentant sous la forme d'une impulsion de force.

22. Procédé selon la revendication 1, **caractérisé en ce que** l'on agit à l'encontre d'une vibration indésirable en procédant à une sollicitation avec une force modifiable, **en ce qu'**au moins un tourillon (04 ; 06) du cylindre (01 ; 18) rotatif est sollicité à dessein, au moins une fois par tour de rotation, avec une impulsion de force, ou bien une précontrainte est déchargée à dessein, et **en ce que** la forme et/ou la durée de l'impulsion de force ou de la décharge inculquée est ressentie comme une excitation, produite par le roulement sur un deuxième cylindre (18 ; 01) d'une perturbation disposée sur la périphérie du cylindre (01 ; 18).

23. Procédé selon la revendication 21 ou 22, **caractérisé en ce que** le tourillon (07 ; 08) est sollicité avec une impulsion de force ou une décharge inculquée depuis l'extérieur, en plus des efforts provoqués par la vibration, ou des impulsions conditionnant la vibration.

24. Procédé selon la revendication 22, **caractérisé en ce qu'**une seule excitation extérieure, en particulier ayant la forme d'une impulsion de force ou d'une décharge, est inculquée, par tour de rotation, à chaque perturbation (09 ; 19) disposée dans la direction périphérique sur le cylindre (01 ; 18) rotatif.

25. Procédé selon la revendication 21, **caractérisé en ce que** la forme et/ou la durée de l'impulsion de force ou de la décharge inculquée est ressentie comme une excitation, produite par le roulement sur un deuxième cylindre (18 ; 01) d'une perturbation disposée sur la périphérie du cylindre (01 ; 18).

26. Procédé selon la revendication 21 ou 22, **caractérisé en ce que** l'impulsion de force ou la décharge est inculquée au tourillon (04 ; 06), sur un côté, opposé au cylindre (01 ; 18), d'un palier (04 ; 06) supportant les tourillons (04 ; 06).

27. Machine d'usinage, comprenant au moins un cylindre (01) rotatif, monté en palier de manière à pouvoir tourner dans des paliers (04 ; 06), avec des tourillons (07 ; 08) aux deux extrémités, et un dispositif pour réduire des vibrations en flexion indésirables, avec au moins un actionneur (10 ; 11), au moyen duquel on s'oppose à une vibration indésirable, **caractérisée en ce que** l'actionneur (10 ; 11) agit sur le palier (04 ; 06), **en ce qu'**un dispositif de commande (12) est prévu, dans lequel une succession, dépendant de la position angulaire en rotation, de signaux (S) pour la commande de l'actionneur (10 ; 11) est stockée, **en ce que**, au moyen de l'actionneur (10 ; 11), une position du tourillon (07, 08) est déplaçable de manière correspondante aux signaux (S), dans un sens de déplacement sensiblement perpendiculaire à l'axe de rotation du cylindre (01).

28. Machine d'usinage selon la revendication 27, **caractérisée en ce que** le tourillon (07 ; 08) est sollicité périodiquement par l'intermédiaire du palier (16 ; 17), avec une impulsion de force d'une valeur maximale de 5 à 15 kN.

29. Machine d'usinage selon la revendication 27, **caractérisée en ce que** le tourillon (07 ; 08) est sollicité par l'intermédiaire du palier (16 ; 17), avec une précontrainte d'une valeur maximale de 5 à 15 kN, et déchargé périodiquement.

30. Machine d'usinage selon la revendication 27, **caractérisée en ce que** le cylindre (01 ; 18) rotatif présente un rapport, entre une longueur (L01) et un diamètre (D01) de son corps, dans la fourchette comprise entre 11 et 7.

31. Machine d'usinage selon la revendication 27, **caractérisée en ce que** la machine d'usinage est réalisée sous forme de machine à imprimer.

32. Machine d'usinage selon la revendication 27, **caractérisée en ce que**, en une position d'application de pression, le cylindre (01) coopère avec au moins un deuxième cylindre (18) en tant que première paire.

33. Machine d'usinage selon la revendication 32, **caractérisée en ce qu'**un seul des deux cylindres (01 ; 18) présente un actionneur (10 ; 11) susceptible d'être sollicité par le signal (S).

34. Machine d'usinage selon la revendication 32, **caractérisée en ce que** deux paires, comprenant globalement quatre cylindres (01 ; 18) forment, entre les cylindres intérieurs (18), un emplacement d'impression double, et **en ce que** seuls les deux cylindres (01) extérieurs présentent un actionneur (10 ; 11) susceptible d'être sollicité chacun par un signal (S).

35. Machine d'usinage selon la revendication 32, **caractérisée en ce que** deux paires, comprenant globalement quatre cylindres (01 ; 18) forment, entre les cylindres intérieurs (18), un emplacement d'impression double, et **en ce que** seuls les deux cylindres (18) formant l'emplacement d'impression présentent un actionneur (10 ; 11) susceptible d'être sollicité chacun par un signal (S).

36. Machine d'usinage selon la revendication 32, **caractérisée en ce que** deux paires, comprenant globalement quatre cylindres (01 ; 18) forment, entre les cylindres intérieurs (18), un emplacement d'impression double, et **en ce qu'**un cylindre intérieur et un autre extérieur (01 ; 18) présentent un actionneur (10 ; 11) susceptible d'être sollicité chacun par un signal (S).

37. Machine d'usinage selon la revendication 32, **caractérisée en ce que** deux paires, comprenant globalement quatre cylindres (01 ; 18) forment, entre les cylindres intérieurs (01), un emplacement d'impression double, et **en ce qu'**un seul des deux cylindres (01) formant un emplacement d'impression double présente un actionneur (10 ; 11) susceptible d'être sollicité chaque fois par un signal (S).

38. Machine d'usinage selon la revendication 32, **caractérisée en ce que** deux paires, comprenant globalement quatre cylindres (01 ; 18) forment, entre les cylindres intérieurs (18), un emplacement d'impression double, et **en ce que** la totalité des quatre cylindres (01 ; 18) présentent un actionneur (10 ; 11) susceptible d'être sollicité chacun par un signal (S).

39. Machine d'usinage selon la revendication 27, **caractérisée en ce que** le cylindre (01 ; 18) est déplaçable par rapport au bâti latéral.

40. Machine d'usinage selon la revendication 27, **caractérisée en ce que** le cylindre (01) est déplacé par l'actionneur (10 ; 11), de manière correspondante aux signaux (S), dans une direction de déplacement sensiblement perpendiculaire à l'axe de rotation du cylindre (01).

41. Machine d'usinage selon la revendication 27, **caractérisée en ce que** l'actionneur (10 ; 11) est réalisé sous forme de piézo-élément.
